# EUROPÄISCHE PATENTSCHRIFT

(11) **EP 0 903 531 B1**
(45) Veröffentlichungstag und Bekanntmachung des Hinweises auf die Patenterteilung: **29.10.2003**
(21) Anmeldenummer: 98108187.0
(22) Anmeldetag: 05.05.1998
(51) Int. Cl.: F16M 7/00

(54) **Einrichtung zur Vergrösserung des Höheneinstellbereichs in einem Nivellierschuh und mit dieser versehener Nivellierschuh**
Height adjustment range extender for levelling foot and levelling foot fitted with it
Dispositif pour augmenter la plage de réglage en hauteur d'une semelle de mise à niveau et semelle munie de celui-ci

(30) Priorität: 18.09.1997 DE 29716792 U
(43) Veröffentlichungstag der Anmeldung: 24.03.1999
(73) Patentinhaber: Air Loc Schrepfer AG, 8700 Küsnacht (CH)
(72) Erfinder: Schrepper, Rudolf, 8700 Küsnacht/ZH (CH)
(74) Vertreter: Hoffmann, Eckart, Dipl.-Ing.

(56) Entgegenhaltungen:
- EP-A- 0 037 473
- DE-A- 4 212 412
- DE-U- 29 716 792
- US-A- 5 110 082

## Beschreibung

Die vorliegende Erfindung betrifft eine Einrichtung zur Vergrößerung des Höheneinstellbereichs bei einem eine ringförmige Stützfläche aufweisenden Nivellierschuh sowie einen mit dieser Einrichtung versehenen Nivellierschuh.

In der Regel werden Maschinen mittels einer Vielzahl von Nivellierschuhen sowie mit diesen jeweils zugeordneten Ankerbolzen in eine für ihren störungsfreien Betrieb wünschenswerte bzw. erforderliche horizontale Lage gebracht. Da die Massenverteilung derartiger Maschinen jedoch häufig nicht gleichförmig, sondern teilweise sehr unterschiedlich ist, müssen nur an den stark belasteten Stellen der Maschinen massive, große und damit teure Nivellierschuhe verwendet werden, während an den weniger belasteten Stellen kleinere und damit preisgünstigere Nivellierschuhe verwendet werden können. Die Verwendung unterschiedlicher Nivellierschuhe führt jedoch häufig zu dem Problem, daß der bei kleineren Nivellierschuhen vorhandene Höhenverstellbereich nicht ausreicht.

Bei herkömmlichen Nivellierschuhen mit relativ großer ebener, beispielsweise quadratischer oder rechteckiger, Auflagefläche, wie dem in US-A-5 110 082 gezeigten, können zur Vergrößerung des Höheneinstellbereichs Höhenausgleichsplatten eingefügt werden. Das Einfügen derartiger Höhenausgleichsplatten mit einer oder mehreren Durchgangsbohrungen für den bzw. die Ankerbolzen erfordert jedoch eine Demontage und erneute Montage der Nivellierschuhe, was zeitaufwendig und demzufolge nachteilig ist. Wenn statt der mit Durchgangslöchern versehenen Höhenausgleichsplatten geschlitzte Blechzwischenlagen verwendet werden, ist eine präzise Nivellierung nicht gewährleistet, weil, beispielsweise durch die bei deren Stanzen entstehenden Aufbördelungen, eine flächige Auflage auf ihnen nicht gewährleistet ist. Außerdem ist das Herausrutschen derartiger Blechzwischenlagen während des Betriebs möglich, was die Störanfälligkeit erhöht und die Betriebssicherheit beeinträchtigt. Die beschriebenen Höhenausgleichsplatten mit Durchgangslöchern oder die geschlitzten Blechzwischenlagen können auch bei Nivellierschuhen mit einem auf ihrer Oberseite angeordneten Stützring verwendet werden, weisen jedoch die gleichen prinzipiellen Nachteile wie bei den Nivellierschuhen mit großflächiger Auflagefläche auf. Derartige Nivellierschuhe mit Stützring sind jedoch insbesondere dann vorteilhaft, wenn der Stützring auf seiner Unterseite als Teil einer Kalotte und die entsprechende Auflagefläche des Nivellierschuhs komplementär dazu ausgebildet ist, um eine Neigungseinstellung des gelagerten Gegenstands bzw. dessen präzise waagrechte Ausrichtung bei geneigtem Boden zu ermöglichen, was für eine spannungsfreie Präzisionsnivellierung unerläßlich ist.

Der vorliegenden Erfindung liegt die Aufgabe zugrunde, eine Einrichtung zu schaffen, mit der der Höheneinstellbereich eines eine ringförmige Stützfläche aufweisenden Nivellierschuhs auf einfache Weise ohne Demontage des Ankerbolzens vergrößert werden kann. Des weiteren liegt der vorliegenden Erfindung die Aufgabe zugrunde, einen Nivellierschuh mit einem auf seiner Oberseite angeordneten Stützring zu schaffen, dessen Höheneinstellbereich ohne Demontage seines Ankerbolzens vergrößert werden kann.

Diese Aufgabe wird durch eine Einrichtung gemäß Anspruch 1 bzw. einen Nivellierschuh gemäß Anspruch 4 gelöst. Vorteilhafte Weiterbildungen der Erfindung sind Gegenstand der Unteransprüche.

Der Schlitz in dem auch Spacer genannten Präzisions-Distanzring, nachfolgend kurz Distanzring genannt, ermöglicht es, den Distanzring bei im Nivellierschuh eingeschraubtem Ankerbolzen und vom Stützring abgehobenem zu lagerndem Gegenstand auf den Stützring aufzusetzen. Der auf der Unterseite des Distanzrings radial innen axial hervorragende ringförmige Ansatz greift in auf den Nivellierschuh aufgesetzter Stellung in den Stützring ein und bildet somit eine in der Ebene der Kontaktflächen formschlüssige Verbindung mit dem Stützring. Dadurch wird verhindert, daß der Distanzring ungewollt von dem Stützring gleitet oder weggeschoben wird. Die auf der Oberseite des Distanzrings radial innen vorhandene, zum ringförmigen Ansatz im wesentlichen komplementäre Ausnehmung ermöglicht es, auf einen aufgesetzten Distanzring weitere Distanzringe aufzusetzen, deren Verrutschen oder Abgleiten ebenfalls durch den Eingriff ihres Ansatzes in die Ausnehmung des darunterliegenden Distanzrings verhindert wird. Das hierdurch mögliche Aufeinanderschichten mehrerer Distanzringe weist den großen Vorteil auf, daß der Höheneinstellbereich sehr flexibel in beträchtlichem Ausmaß vergrößert werden kann, ohne auf verschieden große bzw. verschieden hohe Distanzringe zurückgreifen zu müssen. Daher genügt die Herstellung einer einzigen Bauform eines Distanzrings mit bestimmter Höhe, was aufgrund der dadurch erzielbaren höheren Stückzahlen zu günstigen Herstellungskosten führt.

Wenn der Ankerbolzen relativ zum Nivellierschuh zentrisch angeordnet ist, ist das Aufschieben des Distanzrings auf den Stützring am einfachsten, wenn sich der Schlitz im wesentlichen radial erstreckt. Wenn der Ankerbolzen bei anderen Nivellierschuhtypen exzentrisch angebracht ist, kann der Schlitz parallel versetzt zur vorgenannten radialen Ausrichtung vorgesehen sein.

Wenn der Distanzring lediglich den Höheneinstellbereich eines Nivellierschuhs vergrößern soll, ist es zweckmäßig, die obere und die untere Stirnseite parallel zueinander und senkrecht zur axialen Achse auszugestalten. Dadurch ist der Distanzring längs seines gesamten Umfangs gleich dick. Wenn der Distanzring zum Ausgleich einer Neigung verwendet werden soll, ist es auch möglich, ihn als Keil auszubilden, weshalb dann beispielsweise die untere Stirnseite senkrecht zur axialen Achse wäre und die obere Stirnseite einen von 90° verschiedenen Winkel mit dieser axialen Achse einschließen würde.

Weitere Vorteile, Merkmale und Einzelheiten der Erfindung ergeben sich aus der nachfolgenden Beschreibung eines Ausführungsbeispiels der Erfindung.

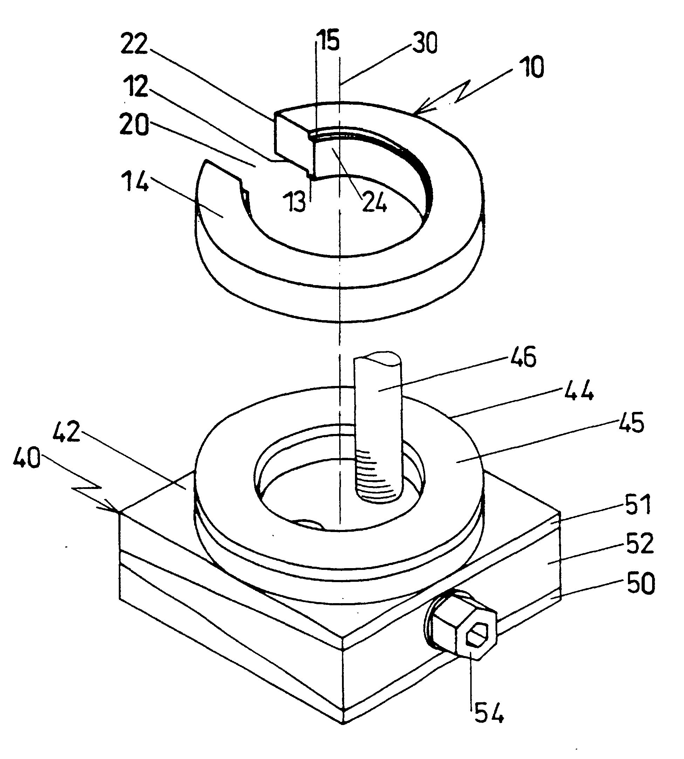

Die einzige Figur zeigt einen erfindungsgemäßen Distanzring, der oberhalb eines Nivellierschuhs mit auf seiner Oberseite angeordnetem Stützring und eingesetztem Ankerbolzen angeordnet ist.

Der untere Teil des Nivellierschuhs 40, mit dem die Höhe verstellt werden kann, ist aus einem Unterkeil 50 und einem Oberkeil 51, deren dickere Seiten in der Figur links angeordnet sind, sowie einem Mittelkeil 52 zusammengesetzt, dessen dickere Seite rechts in der Figur angeordnet ist. Durch Drehen an der Stellschraube 54 wird der Mittelkeil 52 in horizontaler Richtung bezüglich des Unterkeils 50 und des Oberkeils 51 bewegt, wobei der Unterkeil 50 und der Oberkeil 51 in horizontaler Richtung relativ zueinander ortsfest bleiben. Durch die schräge Ausgestaltung der Oberflächen der Keile 50 bis 52 wird bei einer Horizontalbewegung des Mittelkeils 52 der Oberkeil 51 relativ zum Unterkeil 50 angehoben oder abgesenkt.

Auf der Oberseite 42 des gemäß der Figur mit quadratischer Grundfläche ausgebildeten Nivellierschuhs 40 ist ein Stützring 44 angeordnet, dessen Außendurchmesser der Kantenlänge des Nivellierschuhs entspricht. Der Außendurchmesser des Stützrings 44 kann jedoch auch kleiner als die Kantenlänge des Nivellierschuhs 40 sein. Ebenso kann die Grundfläche des Nivellierschuhs 40 auch anders als quadratisch, beispielsweise rechteckig oder trapezförmig, ausgebildet sein.

Ein Ankerbolzen 46 ist im wesentlichen senkrecht zur Oberseite 42 des Oberkeils 51 ausgerichtet und kann von oben her im Unterkeil 50 des Nivellierschuhs 40 eingeschraubt werden oder durch den Nivellierschuh 40 hindurch mittels Schwerlastanker im Boden derjenigen Fläche verankert werden, auf der der zu lagernde Gegenstand abgestützt wird. Gemäß der Figur ist der Ankerbolzen 46 exzentrisch bezüglich des Stützrings 44 angeordnet, er kann jedoch bei anderen Nivellierschuhtypen auch zentrisch angeordnet sein.

Wenn der Nivellierschuh 40 neben einer Höhenverstellbarkeit auch eine Neigungsverstellbarkeit ermöglichen soll, ist die in der Figur nicht dargestellte Fläche, auf der der Stützring 44 auf der Oberseite 42 des Nivellierschuhs 40 aufliegt, als ringförmiger Teil einer Kalotte ausgebildet, wobei die entsprechende Auflagefläche des Stützrings 44 komplementär dazu ist.

Oberhalb des Stützrings 44 ist ein zur Auflage auf dem Stützring 44 vorgesehener Distanzring 10 abgebildet. Der Distanzring 10 weist eine erste bzw. untere Stirnseite 12 auf, die auf der oberen Stirnseite 45 des Stützrings 44 zu liegen kommt. Die untere Stirnseite 12 weist radial innen einen axial nach unten hervorragenden ringförmigen Ansatz 13 auf, dessen Außendurchmesser etwas kleiner als der Innendurchmesser des Stützrings 44 ist, wodurch der Ansatz 13 in den Stützring 44 eingreift und somit in der Ebene der Kontaktflächen - das heißt der Stirnseite 45 des Stützrings 44 und der unteren Stirnseite 12 des Distanzrings 10 - eine formschlüssige Verbindung bildet. Die obere Stirnseite 14 weist radial innen eine Aussparung bzw. Ausnehmung 15 auf, die im wesentlichen formkomplementär zum Ansatz 13 an der unteren Stirnfläche 12 ist. Dadurch kann ein weiterer Distanzring 10 auf einen bereits aufgesetzten Distanzring 10 aufgebracht werden, wobei der Ansatz 13 des oberen Distanzrings 10 in die Ausnehmung des unteren Distanzrings 10 eingreift und dadurch eine formschlüssige Verbindung in der Ebene der Kontaktflächen bildet, die in diesem Fall aus der unteren Stirnseite 14 des oberen Distanzrings 10 und der obere Stirnseite 12 des unteren Distanzrings 10 bestehen. Somit kann durch Verwendung mehrerer Distanzringe 10 der Höheneinstellbereich des Nivellierschuhs 40 in großem Umfang vergrößert werden, ohne unterschiedlich hohe Distanzringe 10 verwenden zu müssen.

Damit der Ankerbolzen 46 nicht demontiert werden muß, um den Distanzring 10 auf den Stützring 44 aufsetzen zu können, ist ein Schlitz 20 im Distanzring 10 vorgesehen, der sich über die gesamte axiale Länge, das heißt die Höhe, des Distanzrings 10 und des Ansatzes 13 erstreckt. Der Schlitz 20 reicht über die gesamte radiale Ausdehnung des Distanzrings 10 und des Ansatzes 13, das heißt von der Innenmantelfläche 24 des Ansatzes 13 bis zur Außenmantelfläche 22 des Distanzrings 10. In der Figur ist der Schlitz 20 so dargestellt, daß er sich in radialer Richtung erstreckt, dies muß jedoch nicht unbedingt der Fall sein. So kann der Schlitz 20 beispielsweise auch in einer Lage angeordnet sein, die bezüglich des Radius in der Horizontalebene parallel versetzt ist. Diese parallel versetzte Ausgestaltung des Schlitzes 20 erleichtert das Einführen des Distanzrings 10 bei exzentrisch angeordnetem Ankerbolzen 46.

Gemäß der Figur ist der Distanzring 10 über seinen gesamten Umfang gleich dick, das heißt, seine Stirnseiten 12 und 14 sind parallel zueinander. Darüber hinaus sind die Stirnseiten 12 und 14 auch senkrecht zur axialen Achse 30 des Distanzrings 10, wodurch eine flächige Auflage auf dem Stützring 44 sowie eine flächige Abstützung des zu lagernden Gegenstands mittels der oberen Stirnseite 14 gewährleistet ist. Der Distanzring 10 kann jedoch beispielsweise auch als Ganzes als Keil ausgebildet sein, der zum Beispiel beim Schlitz 20 am dünnsten ist, das heißt die geringste Höhe aufweist, und an der dem Schlitz radial gegenüberliegenden Stelle am dicksten ist, das heißt die größte Höhe aufweist. Dadurch kann der Distanzring 10 auch dazu verwendet werden, starke Neigungen der Auflagefläche relativ zum lagernden Gegenstand auszugleichen.

Die vorliegende Erfindung ist nicht auf die vorstehend beschriebene Ausführungsform beschränkt. So kann beispielsweise der Ansatz 13 auch in anderer Form als in der dargestellten Form einer senkrecht nach unten ragenden Stufe bzw. Rippe ausgebildet sein, zum Beispiel mit einer schrägen unteren Begrenzungsfläche statt der radial äußeren und der axial unteren Begrenzungsfläche oder etwa mit einer gekrümmten unteren Begrenzungsfläche. Selbstverständlich müßte dann die Ausnehmung 15 komplementär zu einer derartigen Ausgestaltung des Ansatzes 13 sein, um ein Aufeinanderstapeln mehrerer Distanzringe zu ermöglichen. Des weiteren kann auch an der obere Stirnseite 45 des Stützrings 44 - anders als es in der Figur dargestellt ist - ähnlich wie bei der oberen Stirnseite 12 des Distanzrings 10 eine Ausnehmung 15 vorgesehen sein. In diesem Fall ist muß dann natürlich der Außendurchmesser eines Ansatzes 13 eines Distanzrings 10 kleiner sein als die Ausnehmung und nicht kleiner als der Innendurchmesser des Stützrings 44.

## Patentansprüche

1. Einrichtung zur Vergrößerung des Höheneinstellbereichs bei einem eine ringförmige Stützfläche aufweisenden Nivellierschuh, umfassend
einen Distanzring (10), dessen erste Stirnseite (12) radial innen einen axial hervorragenden ringförmigen Ansatz (13) und dessen zweite Stirnseite (14) radial innen eine zum ringförmigen Ansatz (13) im wesentlichen komplementäre Ausnehmung (15) aufweist, wobei ein sich über die gesamte axiale Länge des Distanzrings (10) und des Ansatzes (13) erstreckender Schlitz (20) vorbestimmter Breite vorgesehen ist, der von der Außenmantelfläche (22) des Distanzrings (10) bis zur Innenmantelfläche (24) des Ansatzes (13) reicht.

2. Einrichtung nach Anspruch 1, **dadurch gekennzeichnet, daß** sich der Schlitz (20) im wesentlichen radial erstreckt.

3. Einrichtung nach Anspruch 1 oder 2, **dadurch gekennzeichnet, daß** die erste und die zweite Stirnseite (12, 14) parallel zueinander und senkrecht zur axialen Achse (30) sind.

4. Nivellierschuh, umfassend einen auf seiner Oberseite (42) angeordneten Stützring (44) und einen Ankerbolzen (46),
**gekennzeichnet durch** einen auf dem Stützring (44),der einen vorbestimmten Innendurchmesser aufweist, aufliegenden Distanzring (10), dessen untere Stirnseite (12) radial innen einen axial hervorragenden ringförmigen Ansatz (13) und dessen obere Stirnseite (14) radial innen eine zum ringförmigen Ansatz (13) im wesentlichen komplementäre Ausnehmung (15) aufweist, wobei ein sich über die gesamte axiale Länge des Distanzrings (10) und des Ansatzes (13) erstreckender Schlitz (20) vorbestimmter Breite vorgesehen ist, der von der Außenmantelfläche (22) des Distanzrings (10) bis zur Innenmantelfläche (24) des Ansatzes (13) reicht,
wobei der Außendurchmesser des Ansatzes (13) etwas kleiner als der Innendurchmesser des Stützrings (44) ist, so daß der Ansatz (13) zur Bildung einer in der Ebene der Kontaktflächen formschlüssigen Verbindung in den Stützring (44) eingreift, und wobei die vorbestimmte Breite größer als der Durchmesser des Ankerbolzens (46) ist.

5. Nivellierschuh nach Anspruch 4, **dadurch gekennzeichnet, daß** sich der Schlitz (20) im wesentlichen radial erstreckt.

6. Nivellierschuh nach Anspruch 4 oder 5, **dadurch gekennzeichnet, daß** die obere und die untere Stirnseite (12, 14) des Distanzrings (10) parallel zueinander und senkrecht zur axialen Achse (30) sind.

7. Nivellierschuh nach einem der Ansprüche 4 bis 6, **dadurch gekennzeichnet, daß** mehrere Distanzringe (10) aufeinander liegen, wobei jeweils der Ansatz (13) eines oberen Distanzrings (10) zur Bildung einer in der Ebene der Kontaktflächen formschlüssigen Verbindung in die Ausnehmung (15) eines unteren Distanzrings (10) eingreift.

## Claims

1. A device for increasing the range of height adjustment in a levelling shoe having an annular support surface, including
a spacer ring (10) whose first face (12) has at a radially inward position an axially protruding annular projection (13) and whose second face (14) has at a radially inward position a recess (15) which is substantially complementary to the annular projection (13), wherein there is provided a slot (20) of predetermined width which extends over the entire axial length of the spacer ring (10) and the projection (13) and which extends from the outside peripheral surface (22) of the spacer ring (10) to the inside peripheral surface (24) of the projection (13).

2. A device according to claim 1 **characterised in that** the slot (20) extends substantially radially.

3. A device according to claim 1 or claim 2 **characterised in that** the first and second faces (12, 14) are parallel to each other and perpendicular to the axial axis (30).

4. A levelling shoe including a support ring (44) arranged on its top side (42) and an anchor bolt (46),
**characterised by** a spacer ring (10) which rests on the support ring (44) that is of a predetermined inside diameter and whose lower face (12) has at a radially inward position an axially protruding annular projection (13) and whose upper face (14) has at a radially inward position a recess (15) which is substantially complementary to the annular projection (13), wherein there is provided a slot (20) of predetermined width which extends over the entire axial length of the spacer ring (10) and the projection (13) and which extends from the outside peripheral surface (22) of the spacer ring (10) to the inside peripheral surface (24) of the projection (13),
wherein the outside diameter of the projection (13) is somewhat smaller than the inside diameter of the support ring (44) so that the projection (13) engages into the support ring (44) to form a connection which is positively locking in the plane of the contact surfaces, and wherein the predetermined width is greater than the diameter of the anchor bolt (46).

5. A levelling shoe according to claim 4 **characterised in that** the slot (20) extends substantially radially.

6. A levelling shoe according to claim 4 or claim 5 **characterised in that** the upper and the lower faces (12, 14) of the spacer ring (10) are parallel to each other and perpendicular to the axial axis (30).

7. A levelling shoe according to one of claims 4 to 6 **characterised in that** a plurality of spacer rings (10) rest one upon the other, wherein in each case the projection (13) of a respective upper spacer ring (10) engages into the recess (15) of a respective lower spacer ring (10) to form a connection which is positively locking in the plane of the contact surfaces.

## Revendications

1. Dispositif destiné à augmenter la plage de réglage en hauteur d'une semelle de mise à niveau présentant une surface d'appui annulaire, comprenant
une bague d'écartement (10) dont la première face frontale (12) présente radialement à l'intérieur un épaulement annulaire (13) faisant axialement saillie, et dont la deuxième face frontale (14) présente radialement à l'intérieur un évidement (15) sensiblement complémentaire à l'épaulement annulaire (13), une fente (20) de largeur prédéterminée étant prévue, qui s'étend sur l'ensemble de la longueur axiale de la bague d'écartement (10) et de l'épaulement (13), et qui, partant de la surface d'enveloppe extérieure (22) de la bague d'écartement (10) arrive jusqu'à la surface d'enveloppe intérieure (24) de l'épaulement (13).

2. Dispositif selon la revendication 1, **caractérisé en ce que** la fente (20) s'étend pour l'essentiel radialement.

3. Dispositif selon la revendication 1 ou 2, **caractérisé en ce que** la première et la deuxième face frontale (12, 14) sont parallèles l'une par rapport à l'autre et perpendiculaires à l'axe axial (30).

4. Semelle de mise à niveau, comportant une bague de soutien (44) disposée sur sa face supérieure (42) et un boulon d'ancrage (46),
**caractérisée par** une bague d'écartement (10) d'un diamètre intérieur prédéterminé, qui prend appui sur la bague de soutien (44), dont la face frontale inférieure (12) présente radialement à l'intérieur un épaulement annulaire (13) faisant axialement saillie, et dont la face frontale supérieure (14) présente radialement à l'intérieur un évidement (15) sensiblement complémentaire à l'épaulement annulaire (13), une fente (20) de largeur prédéterminée étant prévue, qui s'étend sur l'ensemble de la longueur axiale de la bague d'écartement (10) et de l'épaulement (13), et qui, partant de la surface d'enveloppe extérieure (22) de la bague d'écartement (10) arrive jusqu'à la surface d'enveloppe intérieure (24) de l'épaulement (13),
le diamètre extérieur de l'épaulement (13) étant légèrement inférieur au diamètre intérieur de la bague de soutien (44), de sorte que l'épaulement (13) s'engage dans la bague de soutien (44) afin de former une liaison par complémentarité de formes dans le plan de la surface de contact, et la largeur prédéterminée étant supérieure au diamètre du boulon d'ancrage (46).

5. Semelle de mise à niveau selon la revendication 4, **caractérisée en ce que** la fente (20) s'étend pour l'essentiel radialement.

6. Semelle de mise à niveau selon la revendication 4 ou 5, **caractérisée en ce que** les faces frontales supérieure et inférieure (12, 14) de la bague d'écartement (10) sont parallèles l'une par rapport à l'autre et perpendiculaires à l'axe axial (30).

7. Semelle de mise à niveau selon l'une quelconque des revendications 4 à 6, **caractérisée en ce que** plusieurs bagues d'écartement (10) sont superposées, l'épaulement (13) d'une bague d'écartement (10) supérieure s'engageant à chaque fois dans l'évidement (15) d'une bague d'écartement (10) inférieure afin de former une liaison par complémentarité de formes dans le plan des surfaces de contact.
